# EUROPÄISCHE PATENTSCHRIFT

(11) **EP 2 867 549 B1**
(45) Veröffentlichungstag und Bekanntmachung des Hinweises auf die Patenterteilung: **09.08.2017**
(21) Anmeldenummer: 13719870.1
(22) Anmeldetag: 03.05.2013
(51) Int. Cl.: F16C 3/02

(54) **HYBRIDWELLE FÜR KRAFTFAHRZEUGE**
HYBRID SHAFT FOR AUTOMOTIVE VEHICLE
ARBRE HYBRIDE POR VÉHICULE AUTOMOBILE

(30) Priorität: 28.06.2012 DE 102012211115
(43) Veröffentlichungstag der Anmeldung: 06.05.2015
(73) Patentinhaber: Bayerische Motoren Werke Aktiengesellschaft, 80809 München (DE)
(72) Erfinder: HOFSTETTER, Josef, 85395 Wimpasing (DE); MINTZLAFF, Johannes, 85635 Hoehenkirchen-Siegertsbrunn (DE); SCHNEIDER, Franz, 80937 Muenchen (DE); STREINZ, Wolfgang, 84034 Landshut (DE)
(86) Internationale Anmeldenummer: PCT/EP2013/059209
(87) Internationale Veröffentlichungsnummer: WO 2014/000926

(56) Entgegenhaltungen:
- EP-A2- 2 444 633
- DE-A1-102009 009 682
- JP-A- H05 180 213

## Beschreibung

Die Erfindung betrifft eine Hybridwelle, insbesondere eine Hybridantriebswelle für ein Fahrzeug, zum Übertragen eines Drehmoments gemäß dem Oberbegriff des Patentanspruchs 1.

In Kraftfahrzeugen kommen Antriebswellen beispielsweise zum Übertragen eines Antriebsmoments einer Antriebseinheit auf ein Hinterachsgetriebe zum Einsatz. Die Antriebswelle muss hierzu einerseits eine ausreichende Festigkeit und Dauerhaltbarkeit aufweisen sowie für einen geometrischen Ausgleich zwischen den Enden der Antriebswelle sorgen, die einerseits mit der Antriebseinheit bzw. einem Getriebeverbund und andererseits mit dem Hinterachsgetriebe verbunden sind, welche jeweils elastisch und somit beweglich zueinander gelagert sind.

Zusätzlich ist die Antriebswelle derart auszulegen, dass diese durch die hohen Betriebsdrehzahlen von bis zu 8000 Umdrehungen pro Minute (bei Personenkraftwagen) nicht zu Schwingungen im kritischen Bereich ihrer Eigenfrequenz angeregt wird. Hierzu muss die Antriebswelle eine ausreichende Steifigkeit aufweisen, so dass ihre Eigenfrequenz oberhalb einer möglichen Anregung durch die Betriebsdrehzahl liegt.

Zum Einsatz kommen daher üblicherweise Antriebswellen aus Stahl, die zur Erzielung einer ausreichenden Steifigkeit und optimalen Auslegung der geforderten Eigenfrequenzen zweiteilig ausgeführt werden. Dies bedeutet, dass zwischen den beiden Wellenteilen ein Verbindungsgelenk sowie ein Mittellager zur Befestigung und Lagerung an der Fahrzeugkarosserie vorgesehen werden, wodurch sich Gewichtsnachteile sowie zusätzliche Steifigkeitsanforderungen an die Karosserie ergeben. Eine einteilige Lösung ist dagegen aufgrund der erforderlichen Gesamtwellenlänge von ca. 1,5 bis 2m in der Regel nicht möglich.

Aus dem Stand der Technik sind daher sogenannte Hybridwellen bekannt. Diese umfassen eine zylinderförmige Stahl- oder Aluminiumwelle, die über ihre Länge mit faserverstärktem Kunststoff überzogen ist. Diese Ausführung ermöglicht eine einteilige Ausgestaltung, so dass das nachteilige Mittellager entfallen kann. Das Hybridrohr vereint hierbei die hohe Biegesteifigkeit und das geringe Gewicht des faserverstärkten Kunststoffs mit einer günstigen Herstellung und einer guten Torsionsfestigkeit des Stahls, so dass ein Durchbiegen der Welle verhindert und dennoch ein hohes Torsionsmoment übertragen werden kann.

So zeigt beispielsweise die US 6,336,986 B1 eine Hybridwelle mit einem zylindrischen Metallrohr und einer auf dem Metallrohr aufgebrachten Schicht aus Faserverbundmaterial, das darüber hinaus beschichtet ist.

Auch die DE 10 2007 036 436 A1 beschreibt eine Hybridwelle mit einer Hohlwelle aus Metall und einer Schicht aus Carbonfasern, die unidirektional parallel zur Längsrichtung der Hohlwelle angeordnet sind.

In beiden Fällen weist das Metallrohr einen einheitlichen Querschnitt bzw. Durchmesser entlang seiner Längserstreckung auf.

Nachteilig bei derartigen Antriebswellen ist eine erforderliche Kompromissfindung zwischen einem möglichst geringen Durchmesser aufgrund eines in der Regel sehr begrenzten Bauraums einerseits, der speziell im Bereich eines Fahrzeugunterbodens aufgrund einer Vielzahl weiterer Fahrzeugkomponenten lokal sehr begrenzt sein kann, und einem möglichst großen Durchmesser der Antriebswelle andererseits, der für eine Anhebung der Eigenfrequenz der Welle - möglichst über die üblicherweise auftretenden Anregungsfrequenzen hinaus - erforderlich ist.

Aus der JP 5-180213 ist eine Antriebswelle bekannt mit einem metallischen Hohlkörper, der einen sich in Längsrichtung ändernden Querschnitt aufweist, und einer äußeren Oberfläche aus faserverstärktem Kunststoff.

Die EP 2 444 633 A2 zeigt eine Antriebswelle mit zylindrischem Metallrohr und einer Ummantelung aus Faserverbundschichten.

Die DE 10 2009 009 682 A1 zeigt eine Antriebswelle aus Faserverbundkunststoffmaterial und Übergangsabschnitten mit Hyperboloid-ähnelnden Formen.

Aufgabe der Erfindung ist es daher eine Hybridwelle bereitzustellen, die bei geringem Eigengewicht eine hohe Steifigkeit aufweist sowie gleichzeitig bauraumsparend ausgeführt und dennoch hinsichtlich ihrer Eigenfrequenzen optimiert ausgelegt ist.

Diese Aufgabe wird gelöst mittels einer Hybridwelle gemäß dem Patentanspruch 1. Vorteilhafte Ausführungsformen ergeben sich aus den abhängigen Ansprüchen.

Demnach wird von einer Hybridwelle, insbesondere einer Hybridantriebswelle für ein Fahrzeug, zum Übertragen eines Drehmoments mit einer Hohlwelle aus Metall ausgegangen, wobei die Hohlwelle in mindestens einem Verstärkungsabschnitt mindestens eine auf einer äußeren Oberfläche der Hohlwelle aufgebrachte Verstärkungsschicht aus faserverstärktem Kunststoff umfasst. Die Hohlwelle umfasst außerdem innerhalb des mindestens einen Verstärkungsabschnitts einen in einer Längsrichtung der Hohlwelle variierenden äußeren Durchmesser.

Der hybride Aufbau der Hybridwelle ermöglicht einerseits eine erhebliche Gewichtsreduktion bei gleichzeitiger Erzielung einer hohen Steifigkeit. Dies bietet die Möglichkeit, die Hybridwelle im Gegensatz zu reinen Stahlwellen deutlich länger, bei Personenkraftwagen somit in der Regel einteilig, auszuführen. Anstelle eines dickwandigen Metallrohrs mit ausreichender Biege- und Torsionssteifigkeit kann bei einer Hybridwelle ein vergleichsweise dünnwandiges Metallrohr eingesetzt werden, welches für eine Übertragung der auftretenden Torsionskräfte aufgrund der zu übertragenden Drehmomente ausreichend dimensioniert ist. Eine ausreichende Biegesteifigkeit ist für die Hohlwelle selbst jedoch nicht erforderlich, sondern wird durch die Verstärkungsschicht aus faserverstärktem Kunststoff bereitgestellt. Somit kann der schwere metallische Anteil (Hohlwelle) kleiner und folglich deutlich leichter ausgelegt sein, als bei einer rein metallischen Antriebswelle. Als Metalle kommen beispielsweise Stahl, Aluminium oder andere geeignete metallische Werkstoffe zum Einsatz. Geeignete Verstärkungsfasern umfassen beispielsweise Kohle-, Glas-, Grafit- und/oder Aramidfasern. Aufgrund des hybriden Aufbaus kann außerdem ein Materialaufwand des vergleichsweise teuren Faserverbundmaterials und somit die Herstellungskosten gegenüber reinen Faserverbundwellen gering gehalten werden. Der Verstärkungsabschnitt kann auf die äußere Oberfläche der Hybridwelle vollständig oder lediglich in einem oder mehreren Teilabschnitten aufgebracht sein.

Als variierender Durchmesser ist ein sich in Längsrichtung der Hybridwelle bzw. der Hohlwelle verändernder Querschnitt zu verstehen. Diese Variation kann beispielsweise eine in Längsrichtung gestufte oder eine in Längsrichtung stufenlose, kontinuierliche Querschnittänderung umfassen. Möglich sind insbesondere mehrere in Längsrichtung aufeinanderfolgende Querschnittänderungen.

Die folgende Darstellung erfolgt anhand kreisrunder Querschnitte der Hybridwelle mit jeweils einem äußeren Durchmesser unterschiedlicher Größe. Selbstverständlich sind ebenso andere geeignete Querschnittformen für die Hohlwelle möglich. Der gewählte Begriff "Durchmesser" ist in diesem Fall entsprechend in analoger Anwendung zu verstehen.

Die Variation des äußeren Durchmessers entlang der Längserstreckung der Hohlwelle ermöglicht unter anderem eine Anpassung an bauraumbedingte Gegebenheiten, insbesondere lokale Engstellen. Insbesondere bei Kraftfahrzeugen verläuft eine derartig ausgeführte Antriebswelle üblicherweise im Bereich eines Fahrzeugunterbodens, in welchem zusätzlich eine Vielzahl weiterer Fahrzeugkomponenten angeordnet ist, wodurch ein verfügbarer Bauraum, wie bereits beschrieben, limitiert ist. Die beschriebene Hybridwelle kann daher in ihrem Querschnitt an besonders engen Stellen reduziert ausgeführt sein. Hierbei ist der reduzierte, kleine Querschnitt natürlich derart zu wählen, dass eine Übertragung des zu erwartenden maximalen Drehmoments weiterhin möglich ist.

Andererseits ermöglicht die vorgeschlagene Ausgestaltung in vorteilhafter Weise die Bereitstellung eines lokal größeren Querschnitts an Stellen mit großzügigerem Raumangebot. Dies ermöglicht für die gesamte Hybridwelle eine Bereitstellung einer verbesserten Biegesteifigkeit und eine gezielte Anpassung einer Eigenfrequenz der gesamten Hybridwelle. Folglich kann eine deutlich steifere Welle bereitgestellt werden, als dies mit einer bekannten Hybridwelle möglich ist, die lediglich eine durchgehende Hohlwelle mit konstantem äußerem Durchmesser aufweist. Die Hohlwelle umfasst innerhalb des mindestens einen Verstärkungsabschnitts einen ersten Abschnitt mit einem ersten äußeren Durchmesser und einen zweiten Abschnitt mit einem zweiten äußeren Durchmesser, wobei der erste äußere Durchmesser ungleich dem zweiten äußeren Durchmesser ist, und der erste Abschnitt und der zweite Abschnitt mittels eines Übergangsabschnitts miteinander verbunden sind.

Folglich kann also der erste äußere Durchmesser größer oder aber kleiner als der zweite äußere Durchmesser sein. Im Folgenden soll der erste äußere Durchmesser größer als der zweite äußere Durchmesser sein. Hierbei handelt es sich jedoch lediglich um eine beispielhaft gewählte Definition, so dass ebenso der umgekehrte Fall möglich ist. Die entsprechenden Bezeichnungen des ersten Abschnitts bzw. des ersten äußeren Durchmessers und des zweiten Abschnitts bzw. des zweiten äußeren Durchmessers sind in diesem Fall entsprechend auszutauschen.

Beispielsweise kann die Hohlwelle im einfachsten Fall zwei zylinderförmige Abschnitte umfassen, die mittels des Übergangsabschnitts miteinander verbunden sind. Es versteht sich, dass ebenso eine Mehrzahl von ersten und zweiten Abschnitten vorgesehen werden können, die jeweils mit einem eigenen Übergangsabschnitt miteinander verbunden sind und jeweils einen unterschiedlichen Durchmesser gegenüber dem benachbarten Abschnitt aufweisen.

Der Übergangsabschnitt ist erfindungsgemäß derart ausgebildet, dass eine äußere Mantelfläche des Übergangsabschnitts einen stetig gekrümmten Übergang zu einer äußeren Mantelfläche des kleineren zweiten Abschnitts aufweist.

Dieser Übergang weist konstruktionsbedingt einen in Längsrichtung der Hohlwelle verlaufenden Konturverlauf mit einem stumpfen äußeren Winkel auf, also einem äußeren Winkel größer 90° und kleiner 180°. Ein Auflegen einer gemeinsamen Verstärkungsschicht auf die beiden Mantelflächen birgt die Gefahr von Lufteinschlüssen oder sogar eines Abhebens der Verstärkungsschicht von der gesamten Hohlwellenoberfläche, speziell jedoch im Bereich des Übergangs, aufgrund des beschriebenen stumpfen Winkels. Hierbei spielt unter anderem eine gewisse Eigensteifigkeit der Verstärkungsschicht aus faserverstärktem Kunststoff eine entscheidende Rolle, wodurch sich die Verstärkungsschicht nicht in beliebiger Weise an eine mehrdimensional gekrümmte Mantelform der Hohlwelle anformen und zuverlässig aufbringen lässt. Die Folge des resultierenden Abhebens ist eine Schwächung der Verstärkung und somit eine lokale Schwächung der gesamten Hybridwelle.

Der beschriebene stetig gekrümmte Übergang speziell zwischen der Mantelfläche des Übergangsabschnitt und der Mantelfläche des zweiten Abschnitts der Hohlwelle ermöglicht also aufgrund der vorgeschlagenen stetig gekrümmten Formgebung in vorteilhafter Weise ein sicheres Aufbringen der Verstärkungsschicht aus faserverstärktem Kunststoff. Insbesondere wird auf diese Weise auch im Bereich der Krümmung ein Anliegen der Verstärkungsschicht an der äußeren Oberfläche der Hohlwelle ermöglicht und die Hohlwelle durchgehend und zuverlässig verstärkt. Der stetig gekrümmte Übergang umfasst erfindungsgemäß einen hyperbolischen Übergang mit einem konkaven Krümmungsradius.

Als hyperbolischer Übergang ist insbesondere eine Hyperboloid-förmige Form zu verstehen, die auch als antiklastisch bezeichnet wird und ein negatives Krümmungsmaß aufweist. Mit anderen Worten ist der Übergang zumindest zwischen Übergangsabschnitt und zweitem Abschnitt der Hohlwelle als Rotationshyperboloid ausgestaltet. Eine beispielhafte Darstellung ist nachfolgend in den Figuren beschrieben.

Ein Übergang zwischen dem ersten Abschnitt mit dem größeren Durchmesser und dem Übergangsbereich ist aufgrund eines äußeren Winkels des zugehörigen Konturverlaufs von mehr als 180° als weniger kritisch anzusehen und kann daher unstetig oder ebenfalls mit einer stetigen Krümmung (mit entgegengesetzter Krümmung) ausgeführt sein. Die Verstärkungsschicht umfasst um die Hohlwelle gewickelte Faserbündel. Die Faserbündel, sogenannte Rovings, werden hierbei durch Umwickeln auf die Hohlwelle aufgebracht. Verfahren Ausbilden der Verstärkungsschicht mittels Faserbündeln sind bekannt, so dass auf eine weitere Darstellung verzichtet wird. Erfindungsgemäß sind die Faserbündel mit einem Wickelwinkel von 10° bis 20°, vorzugsweise 10° bis 15°, bezüglich der Längsrichtung der Hohlwelle ausgerichtet. Da die Verstärkungsschicht kein Drehmoment übertragen muss, kann der Wickelwinkel der Faserbündel klein bzw. flach gehalten werden. Ein derart flacher Wickelwinkel wirkt sich einerseits begünstigend auf eine möglichst hohe Biegesteifigkeit der Hybridwelle aus und bewirkt zusätzlich, dass die Faserbündel mit einem größeren Biegeradius um die Welle gekrümmt werden, als bei einem größeren bzw. steileren Wickelwinkel. Dies ist insbesondere im Bereich des Übergangsbereichs, vor allem jedoch im Übergang zwischen Übergangsbereich und zweitem kleineren Abschnitt der Hohlwelle, von Bedeutung, so dass hierdurch ein Abheben der Fasern bzw. der Verstärkungsschicht von der Hohlwelle reduziert oder sogar verhindert werden kann.

Besonders vorteilhaft ist daher eine Kombination aus einem derart flachen Wickelwinkel der Faserbündel und dem hyperbolischen Übergang. Da ein Rotationshyperboloid als geometrische Form bei einer Torsionsverdrehung um eine Längsachse aus parallel zueinander gebildeten Stäben gebildet werden kann, lässt sich dies in analoger Anwendung auf die Faserbündel übertragen. Auch diese sind erfindungsgemäß parallel zueinander ausgerichtet angeordnet und um den flachen Wickelwinkel bezüglich der Längsachse der Hohlwelle verdreht, so dass die Faserbündel ebenfalls einen Hyperboloid-förmigen Körper (entspricht der Verstärkungsschicht) bilden. Dieser ist anschaulich gesprochen auf den ebenfalls hyperbolischen Übergang der Hohlwelle aufgelegt.

Dies bietet den Vorteil, dass die Faserbündel aufgrund ihrer Anordnung und gegenseitige Verdrehung (Wickelwinkel) bereits im Wesentlichen dem analogen hyperbolischen Verlauf der Mantelfläche folgen und auf diese Weise lediglich in geringem bzw. minimalem Maße in ihrer eigenen Längserstreckung gekrümmt werden.

Zusammenfassend wird also ein flächiges und gleichzeitig zuverlässiges Anliegen auf der Hohlwelle bewirkt, auch im Übergangsbereich bzw. des Übergangs zu dem kleineren zweiten Abschnitt der Hohlwelle. Ein Abheben der Verstärkungsschicht kann somit vermieden werden und die Hybridwelle trotz einem über die Längsrichtung variierenden Durchmesser zuverlässig mit der Verstärkungsschicht speziell in diesen Bereichen verstärkt werden.

Gemäß einer beispielhaften Ausführungsform kann die Hybridwelle eine Hohlwelle mit einem ersten Abschnitt und einem zweiten Abschnitt aufweisen, wobei der erste Abschnitt einen äußeren Durchmesser von etwa 75mm und der zweite Abschnitt einen Durchmesser von etwa 70mm umfasst.

Ebenfalls beispielsweise umfasst der Übergangsbereich eine Länge von 5 bis 10cm.

Gemäß einer Ausführungsform kann der konkave Krümmungsradius einen Wert zwischen 0,8m und 1,2m umfassen.

Des Weiteren kann die Hybridwelle mindestens ein Crashelement zum Absorbieren von Verformungsenergie in der Längsrichtung der Hohlwelle umfassen. Das Chrashelement ist beispielsweise als sogenanntes Stülpelement derart ausgestaltet, dass ein erster Teil der Hohlwelle mit einem kleinen Durchmesser in einen weiteren Teil mit größerem Durchmesser eingestülpt werden kann, wenn eine definierte Kraft in Längsrichtung der Hohlwelle einwirkt, wie beispielsweise im Falle eines Crashs, insbesondere eines Frontalcrashs. Im Gegensatz zu einer reinen Faserverbundwelle kann mit der vorgeschlagenen Hybridwelle aufgrund der Hohlwelle aus Metall eine Crash-Fähigkeit vorgesehen werden.

Die Hybridwelle kann außerdem an mindestens einem seiner beiden Enden ein Anbauteil, also beispielsweise ein Gelenk, einen Flansch, ein Schiebestück oder dergleichen zum drehmomentübertragenden Anbinden der Hybridwelle oder Auswuchtbleche umfassen. Diese Anbauteile sind vorzugsweise mit der metallischen Hohlwelle stoffschlüssig verbunden, insbesondere verschweißt oder verklebt. Hierzu ist die Hohlwelle derart ausgestaltet, dass ein Ende oder beide Enden der Hohlwelle nicht durch die Verstärkungsschicht bedeckt, also nicht umwickelt sind, sondern über die Verstärkungsschicht hinausragen, so dass eine Verbindung mit dem jeweiligen Anbauteil auf einfache Weise möglich ist.

Die Erfindung wird nachfolgend unter Bezugnahme auf die Zeichnungen anhand eines Ausführungsbeispiels dargestellt. Es zeigen:
- Fig. 1: eine Schnittansicht einer erfindungsgemäßen Hybridwelle,
- Fig. 2: eine erste Detailansicht A aus Fig. 1, und
- Fig. 3: eine zweite Detailansicht B aus der Fig. 1.

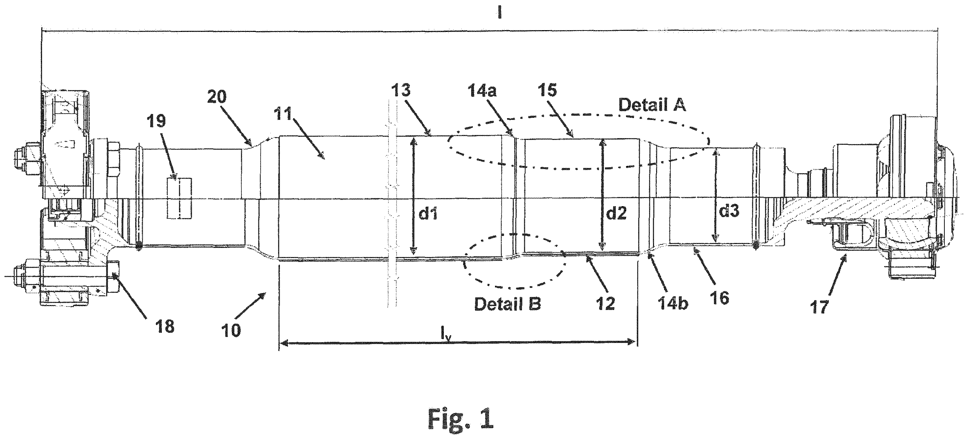

Fig. 1 zeigt in ihrer oberen Hälfte eine Hybridwelle 10 in einer Außenansicht sowie in der unteren Hälfte in einer längsgeschnittenen Ansicht. Die Hybridwelle 10 kann beispielsweise eine Hybridwelle für ein Fahrzeug (nicht dargestellt) sein. Hierzu umfasst sie zum Übertragen eines Drehmoments eine Hohlwelle 11 aus Metall, wobei die Hohlwelle 11 mehrere zylindrische Rohrabschnitte, unter anderem einen ersten Abschnitt 13, einen zweiten Abschnitt 15 sowie einen dritten Abschnitt 16, umfasst. Diese Abschnitte sind jeweils mittels eines Übergangsabschnittes 14a, 14b mit dem jeweils benachbarten Abschnitt verbunden und weisen jeweils einen unterschiedlichen Durchmesser d1, d2, d3 auf, so dass die Hohlwelle 11 einen in einer Längsrichtung der Hohlwelle variierenden äußeren Durchmesser aufweist. Die Abschnitte 13 und 15 sowie der die beiden Abschnitte 13, 15 verbindende Übergangsabschnitt 14a sind mit einem gemeinsamen Verstärkungsabschnitt 12 der Länge lᵥ aus faserverstärktem Kunststoff umwickelt. Hierbei weist der Abschnitt 13 den größeren Durchmesser d1 gegenüber dem Abschnitt 15 mit dem kleineren Durchmesser d2 auf.

Die Abschnitte können derart angeordnet sein, dass sie an einen verfügbaren Bauraum eines Fahrzeugs angepasst sind und diesen somit optimal nutzen, um trotz beengter Raumverhältnisse eine möglichst hohe Steifigkeit bereitstellen zu können.

Zusätzlich und lediglich optional kann die Hybridwelle 10 an ihren beiden entgegengesetzten Enden jeweils ein Anbauteil, beispielsweise einen Längenausgleich 17, und/oder einen Flansch 18 umfassen. Ebenfalls optional kann ein Auswuchtblech 19 an der Hybridwelle 10 befestigt sein.

Wie in Fig. 1 ebenfalls angedeutet, umfasst die Hybridwelle 10 mehrere Abschnitte mit jeweils eigenem Durchmesser. Dass der Verstärkungsabschnitt lediglich in den beiden Abschnitten 13 und 15 sowie in dem Übergangsabschnitt 14a angeordnet ist, ist beispielhaft - jedoch in keiner Weise beschränkend - zu verstehen. Es ist außerdem möglich, einen gemeinsamen Verstärkungsabschnitt vorzusehen, der ebenfalls einen oder mehrere der anderen Abschnitte umschließt.

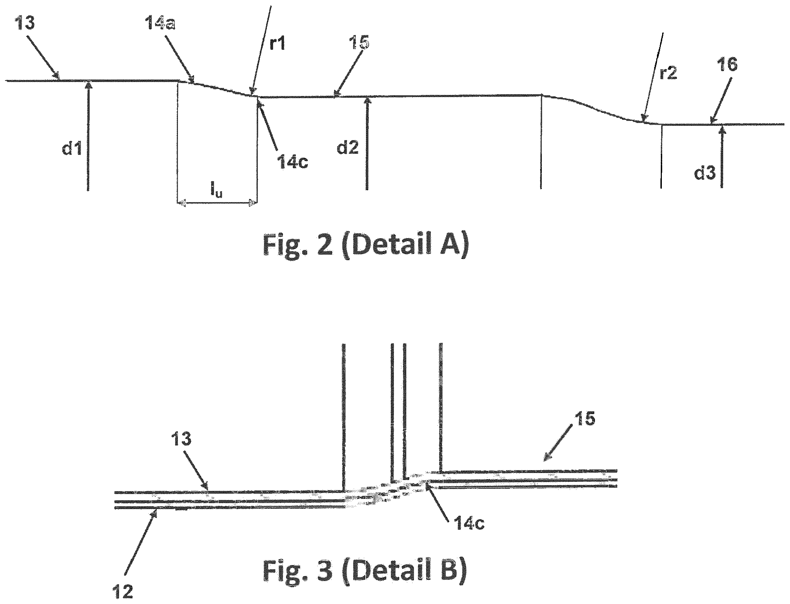

Wie in Fig. 2 im Detail A (vgl. Fig. 1) anhand eines Konturverlaufs der Hohlwelle 11 in Längsrichtung der Hybridwelle dargestellt, weist der Übergangsabschnitt 14a eine Länge lᵤ auf und ist derart ausgebildet, dass eine äußere Mantelfläche des Übergangsabschnitts 14a einen stetig gekrümmten Übergang 14c zu einer äußeren Mantelfläche des kleineren zweiten Abschnitts 15 aufweist. Der stetig gekrümmte Übergang 14c ist als hyperbolischer Übergang mit einem konkaven Krümmungsradius r1 ausgebildet.

Dies ermöglicht in Verbindung mit einem flachen Wickelwinkel von Faserbündeln der Verstärkungsschicht 12 eine möglichst optimal und flächig an der Hohlwelle (Abschnitte 13, 15, 14a) anliegende Verstärkungsschicht 12. Auf diese Weise können gemäß Detailansicht B in Fig. 3 (vgl. Fig. 1) Lufteinschlüsse und Ablösungen der Verstärkungsschicht 12 insbesondere im Bereich des Übergangs des Übergangsabschnittes 14a zu dem zweiten kleineren Abschnitt 15 vermieden werden. Gemäß einer beispielhaften Ausführungsform beträgt der Durchmesser d1 etwa 75mm, der Durchmesser d2 etwa 70mm, die Länge lᵤ des Übergangsabschnitts zwischen 50 und 100mm und der Krümmungsradius r1 zwischen 800 und 1200mm, insbesondere ca. 1000mm.

## Patentansprüche

1. Hybridwelle (10), insbesondere Hybridwelle für ein Fahrzeug, zum Übertragen eines Drehmoments mit einer Hohlwelle (11) aus Metall, wobei die Hohlwelle (11) in mindestens einem Verstärkungsabschnitt mindestens eine auf einer äußeren Oberfläche der Hohlwelle (11) aufgebrachte Verstärkungsschicht (12) aus faserverstärktem Kunststoff umfasst, wobei
die Hohlwelle (11) innerhalb des mindestens einen Verstärkungsabschnitts einen in einer Längsrichtung der Hohlwelle (11) variierenden äußeren Durchmesser (d1, d2) umfasst, wobei die Hohlwelle (11) innerhalb des mindestens einen Verstärkungsabschnitts einen ersten Abschnitt (13) mit einem ersten äußeren Durchmesser (d1) und einen zweiten Abschnitt (15) mit einem zweiten äußeren Durchmesser (d2) umfasst, wobei der erste äußere Durchmesser (d1) größer als der zweite äußere Durchmesser (d2) ist, und der erste Abschnitt (13) und der zweite Abschnitt (15) mittels eines Übergangsabschnitts (14a) miteinander verbunden sind, wobei die Verstärkungsschicht (12) um die Hohlwelle (11) gewickelte Faserbündel umfasst, **dadurch gekennzeichnet, dass**
der Übergangsabschnitt (14a) derart ausgebildet ist, dass eine äußere Mantelfläche des Übergangsabschnitts (14a) einen stetig gekrümmten Übergang (14c) zu einer äußeren Mantelfläche des kleineren zweiten Abschnitts (15) aufweist, und der stetig gekrümmte Übergang (14c) einen hyperbolischen Übergang mit einem konkaven Krümmungsradius (r1) umfasst, und die Faserbündel parallel zueinander ausgerichtet und mit einem Wickelwinkel von 10° bis 20° bezüglich der Längsrichtung der Hohlwelle (11) ausgerichtet sind, so dass die Faserbündel ebenfalls einen Hyperboloid-förmigen Körper bilden, der auf den ebenfalls hyperbolischen Übergang (14c) der Hohlwelle (11) aufgelegt ist.

2. Hybridwelle nach Anspruch 1, **dadurch gekennzeichnet, dass** der Übergangsbereich (14a) eine Länge (lᵤ) von 5 bis 10cm umfasst.

3. Hybridwelle nach Anspruch 1, **dadurch gekennzeichnet, dass** der konkave Krümmungsradius (r1) einen Wert zwischen 0,8m und 1,2m umfasst.

4. Hybridwelle nach Anspruch 1, **dadurch gekennzeichnet, dass** die Hybridwelle (10) mindestens ein Crashelement (20) zum Absorbieren von Verformungsenergie in der Längsrichtung der Hohlwelle (10) umfasst.

## Claims

1. A hybrid shaft (10), especially a hybrid shaft for a vehicle, for transmitting a torque, with a hollow shaft (11) made of metal, wherein the hollow shaft (11) in at least one reinforcement portion comprises at least one reinforcement layer (12) of fibre-reinforced plastics material applied to an outer surface of the hollow shaft (11), wherein
the hollow shaft (11) within the at least one reinforcement portion comprises an external diameter (d1, d2) which varies in a longitudinal direction of the hollow shaft (11), wherein the hollow shaft (11) within the at least one reinforcement portion comprises a first portion (13) with a first external diameter (d1) and a second portion (15) with a second external diameter (d2), wherein the first external diameter (d1) is greater than the second external diameter (d2), and the first portion (13) and the second portion (15) are connected together by means of a transition portion (14a), wherein the reinforcement layer (12) comprises bundles of fibres wound around the hollow shaft (11), **characterised in that**
the transition portion (14a) is formed in such a way that an outer peripheral surface of the transition portion (14a) has a continuously curved transition (14c) to an outer peripheral surface of the smaller second portion (15), and the continuously curved transition (14c) comprises a hyperbolic transition with a concave radius of curvature (r1), and the bundles of fibres are oriented parallel to each other and are oriented with a winding angle of 10° to 20° with respect to the longitudinal direction of the hollow shaft (11), so that the bundles of fibres likewise form a hyperboloid-shaped body which is placed on the likewise hyperbolic transition (14c) of the hollow shaft (11).

2. A hybrid shaft according to Claim 1, **characterised in that** the transition region (14a) comprises a length (lᵤ) of 5 to 10 cm.

3. A hybrid shaft according to Claim 1, **characterised in that** the concave radius of curvature (r1) comprises a value of between 0.8 m and 1.2 m.

4. A hybrid shaft according to Claim 1, **characterised in that** the hybrid shaft (10) comprises at least one crash element (20) for absorbing deformation energy in the longitudinal direction of the hollow shaft (10).

## Revendications

1. Arbre hybride (10), en particulier destiné à un véhicule pour permettre de transmettre un couple de rotation comprenant un arbre creux (11) en métal, cet arbre creux (11) comprenant, dans au moins un segment de renfort, au moins une couche de renfort (12) en un matériau synthétique renforcé par des fibres appliquée sur la surface externe de l'arbre creux (11),
l'arbre creux (11) ayant, à la partie interne du segment de renfort un diamètre externe (d1, d2) variable dans sa direction longitudinale, l'arbre creux (11) ayant, dans le segment de renfort un premier segment (13) avec un premier diamètre externe (d1) et un second segment (15) avec un second diamètre externe (d2), le premier diamètre externe (d1) étant supérieur au second diamètre externe (d2) et le premier segment (13) et le second segment (15) étant reliés par un segment de transition (14a), la couche de renfort (12) comportant des faisceaux de fibres enroulés autour de l'arbre creux (11),
**caractérisé en ce que**
le segment de transition (14a) est réalisé de sorte que sa surface enveloppe externe ait une transition courbée de façon continue (14c) vers la surface enveloppe externe du second segment (15) plus petit, et la transition courbée de façon continue (14c) est une transition hyperbolique avec un rayon de courbure concave (r1) et les faisceaux de fibres sont orientés parallèlement et avec un angle d'enroulement de 10° à 20° par rapport à la direction longitudinale de l'arbre creux (11) de sorte que les faisceaux de fibres forment également un corps en forme d'hyperboloïde qui est appliqué sur la transition également hyperbolique (14c) de l'arbre creux (11).

2. Arbre hybride conforme à la revendication 1,
**caractérisé en ce que**
la zone de transition (14a) a une longueur (lᵤ) de 5 à 10 cm.

3. Arbre hybride conforme à la revendication 1,
**caractérisé en ce que**
le rayon de courbure concave (r1) a une valeur comprise entre 0,8 m et 1,2 m.

4. Arbre hybride conforme à la revendication 1,
**caractérisé en ce qu'**
il comporte au moins un élément de collision (20) permettant d'absorber l'énergie de déformation dans sa direction longitudinale.
